# EUROPÄISCHE PATENTSCHRIFT

(11) **EP 1 918 471 B1**
(45) Veröffentlichungstag und Bekanntmachung des Hinweises auf die Patenterteilung: **05.08.2009**
(21) Anmeldenummer: 07017836.3
(22) Anmeldetag: 12.09.2007
(51) Int. Cl.: E04B 1/78

(54) **Dämmblockelement zur Unterbrechung von Wärmebrücken im Fussbereich des Mauerwerks**
Insulation block element for interrupting thermal bridges in the transition area between a wall and a foundation
Bloc d'isolation pour interrompre des ponts thermiques dans la zone de transition entre un mur et une fondation

(43) Veröffentlichungstag der Anmeldung: 07.05.2008
(73) Patentinhaber: Vysoke uceni technicke v Brne Fakulta stavebni Ustav pozemniho stavitelstvi, 602 00 BRNO (CZ)
(72) Erfinder: Matejka, Libor, 60200 Brno (CZ); Sinogl, Jiri, 37004 Ceske Budejovice (CZ); Pencik, Jan, 621 00 Brno (CZ)
(74) Vertreter: Malusek, Jiri

(56) Entgegenhaltungen:
- EP-A- 1 154 086
- DE-A1- 19 652 141
- DE-U1-5202005 006 85

## Beschreibung

### Technischer Bereich

Die Erfindung betrifft ein Dämmblockelement zur Unterbrechung der Wärmebrücken im Fuß des Außen- und Innenmauewerks. Diese Lösung betrifft insbesondere Anwendungen im Niedrigenergie- und Passivhausbau.

### Stand der Technik

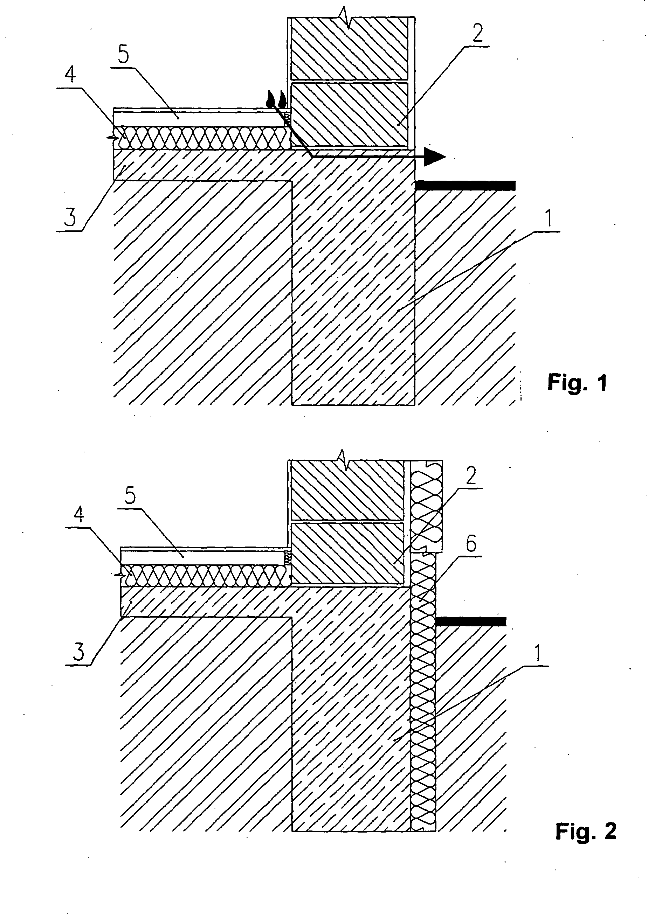

In der letzten Zeit entstehen im Zusammenhang mit den Forderungen nach Energieeinsparungen neue - energiesparende Bauwerksformen. Diese Bauwerke sind im hohen Maße wärmegedämmt, doch an einigen Problemstellen treten wiederholt Wärmebrücken auf, welche das gesamte Bauwerk negativ beeinflussen. In der Abb. 1 ist mit einem Pfeil eine Wärmebrücke im Bauwerk dargestellt, das mit keinen besonderen Maßnahmen wärmegedämmt wurde. Auf dem Flächenfundament wurde die Außenwand 2 errichtet. Im Bauinneren wurde über der Betonplatte 3 des Fußbodens und unterhalb der Trittschicht und der druckverteilenden Schicht 5 des Fußbodens die Wärmedämmung 4 angebracht. Mit dem Pfeil ist die vorhandene Wärmebrücke dargestellt. Die richtige wärmetechnische Lösung dieses kritischen Konstruktionsdetails wurde in der Vergangenheit oft vernachlässigt.

Heute gibt es grundsätzlich zwei Lösungsmöglichkeiten, um die Unterbrechung von Wärmebrücken im Fuß des Mauerwerks zu erreichen.

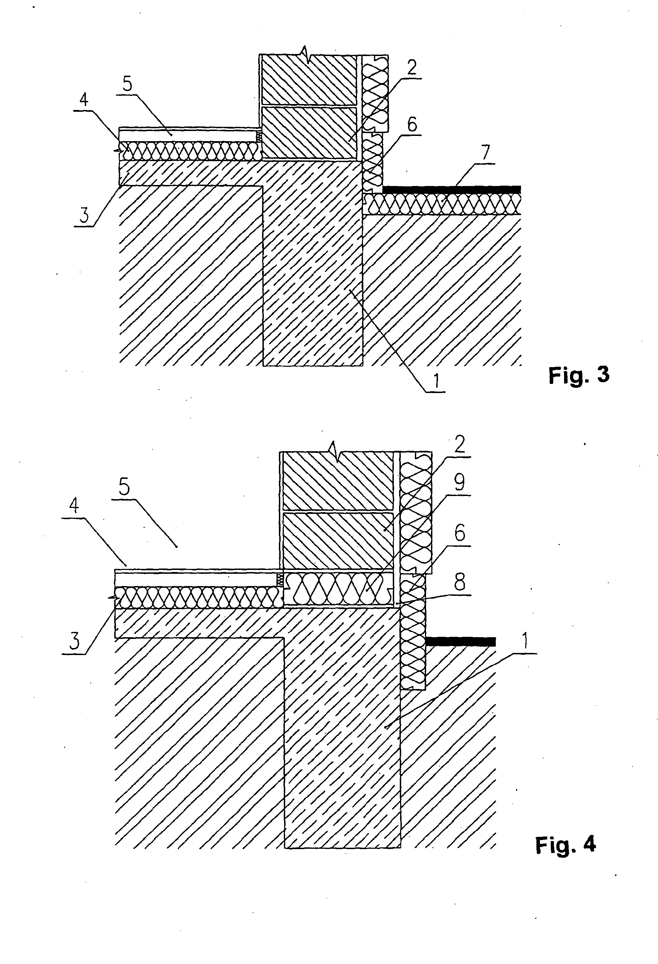

In Fig. 2 und 3 sind zwei Varianten der ersten Möglichkeit zur Unterbrechung von Wärmebrücken dargestellt. Die Abbildung zeigt die Variante, bei der die Wärmedämmung 6 senkrecht zum Fundament und zum Mauerwerk, ggf. in entsprechender Tiefe auch unterhalb des planierten Geländes verlegt wird, was die Verbesserung der wärmetechnischen Eigenschaften im Fuß des Mauerwerks sicherstellt. Allerdings beseitigt diese Maßnahme die Wärmebrücke im Fuß des Mauerwerks nicht direkt - vielmehr wird mit der angebrachten Wärmedämmung 6 lediglich die Oberflächentemperatur an der Anschlussstelle des Mauerwerks und der Wärmedämmung erhöht.

Sollte es nicht möglich sein, die Wärmedämmung 6 senkrecht anzubringen, kann sie auch im Gelände - wie in der zweiten Variante Fig. 3 dargestellt - in erforderlicher Entfernung vom Außenmauerwerk als Wärmedämmung 7 angebracht werden.

Die zweite Möglichkeit - Fig. 4 - besteht in der Unterbrechung der Wärmebrücke im Fuß 8 des Mauerwerks, indem Dämmblockelemente 9 direkt an der Stelle der Wärmebrücke angebracht werden. Diese Lösung beseitigt direkt und wirksam die vorhandene Wärmebrücke. Das Mauerwerk wird dann auf dem Dämmblockelement errichtet, das zugleich auch eine wasserdichte Schicht gegen aufsteigende Feuchtigkeit bildet. Auf diese Dämmblöcke 9, die direkt an der Stelle einer möglichen Wärmebrücke eingebaut werden, werden hohe Anforderungen bezüglich ihrer Druckfestigkeit gestellt: diese Dämmelemente müssen nämlich das gesamte Gewicht des Bauwerks in die Fundamente und in die Sohle ableiten. Zurzeit werden diese Dämmblockelemente mit Wärmedämmung aus Schaumglas oder als Formsteine mit tragender Schicht aus Beton und einer Wärmedämmung aus Polystyrol hergestellt.

Doch die Elemente aus Schaumglas, wie bei den Dämmblockelementen 9 der Fall ist, sind sehr spröde und müssen auf einer Schicht heißen Bitumens verlegt werden - dadurch stellt dieses Verfahren hohe Anforderungen an die Einbautechnologie.

Der Nachteil bei dieser Art der Unterbrechung der Wärmebrücke im Fuß des Mauerwerks ist der sehr hohe Preis dieser Lösung, bei einer Betoneinlage auch noch die verschlechterten wärmetechnischen Eigenschaften, zudem können diese Blöcke keinen seitlichen Druck übertragen. Kommt das Schaumglas in Berührung mit Wasser, das ggf. in der Winterperiode einfriert, wird dadurch die Struktur der Schauglasdämmung zerstört und die Lastübertragung auf die Sohle möglicherweise beeinträchtigt.

Ein Beispiel der zweiten Möglichkeit ist auch aus der DE-U-202 005 006 855 bekannt.

### Offenbarung der Erfindung

Die vorstehend aufgeführten Nachteile werden mit dem Wärmedämmblock gemäss der Erfindung behoben werden, deren Prinzip darin besteht, dass der Block aus mindestens zwei Platten aus HDPE-Recyclingkunststoff oder einer Modifizierung dieses Materials besteht, deren Stoßflächen mit Feder und Nut versehen sind - diese rasten beim Zusammenfügen der beiden Platten ineinander.

In bevorzugter Ausführung bilden diese Platten einen kompakten Block.

In bevorzugter Ausführung wird an der Oberseite des Dämmblocks eine Schicht Zementmörtel aufgetragen, so dass eine Ausgleichschicht und gleichzeitig auch eine Lagerfuge entstehen. An der unteren Seite wird zwischen der Hydroisolierung und der unteren Platte eine Schicht Klebstoff aufgetragen.

In einer weiteren bevorzugten Ausführung sind die Randplatten des Dämmblocks an einer Seite glatt.

In einer weiteren bevorzugten Ausführung ist dieses Dämmblockelement mit einer senkrecht an die Stoßflächen angebrachten Bewehrung versehen, die im Block vergossen ist.

In einer weiteren bevorzugten Ausführung besteht dieser Block aus Platten, die mit Öffnungen für Bewehrung aus korrosionsfreiem Stahl versehen sind.

### Kurze Beschreibung derZeichnungen

Die Erfindung wird im Folgenden mit Hilfe von Zeichnungen vorgestellt. Es zeigen:
Fig. 1 - den Querschnitt im Fußbereich des Gebäudes ohne eine Behandlung der Wärmebrücke;
Fig. 2 - eine Schnittansicht an die erste Variante der ersten Lösung zur Bewältigung der Wärmebrücke nach dem Stand der Technik
Fig. 3 - eine Schnittansicht an eine weitere Variante der ersten Lösung zur Bewältigung der Wärmebrücke nach dem Stand der Technik
Fig. 4 - die zweite Lösung zur Bewältigung der Wärmebrücke nach dem Stand der Technik,
Fig. 5 - eine Schnittansicht im Fußbereich des Gebäudes mit Dämmblockelement gem. der dargestellten technischen Lösung.
Fig. 6 - die Temperaturverteilung in der Konstruktion nach Fig. 5
Fig. 7 - eine Schnittansicht einer Trennwand mit Dämmblock nach der vorgestellten technischen Lösung,
Fig. 8 - die Temperaturverteilung in der Konstruktion nach Fig. 7,
Fig. 9 - ein Detail des Dämmblockelementes nach der Erfindung,
Fig. 10 - das Detail einer anderen Ausführung des Dämmblockelementes nach der Erfindung.

### Ausführungsform derErfindung

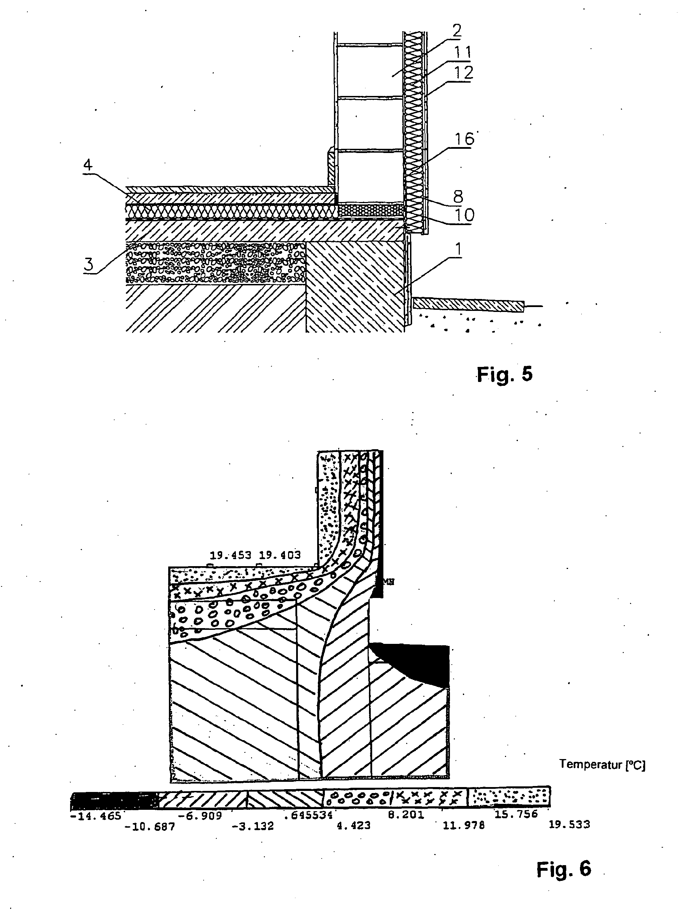

Die Fig. 5 veranschaulicht in der Schnittansicht den Fußbereich des Mauerwerks die Situation, wonach auf dem Flächenfundament 1 die Außenwand 2 errichtet wurde. Im Fußbereich 8 des Gebäudes wurde zwischen dem Fundament 1 bzw. der Betonplatte 3 des Fußbodens und der Außenwand 2 das Wärmedämmelement (Dämmblock) 10 angeordnet, das nachstehend eingehend beschrieben ist. Bei dieser Lösung sieht man deutlich, dass die Wand 2 mit einer Hydroisolierung 16 von außen versehen ist, an die dann die Wärmedämmung angebracht ist, deren Oberfläche wiederum eine Oberflächenbehandlung 12 erfahren hat. Oberhalb der Betonplatte 3 des Fußbodens ist die Wärmedämmung 4 angebracht. Weitere Fußbodenschichten werden nicht mehr detailliert beschrieben.

Fig. 6 stellt die Temperaturverteilung bei der vorstehend vorgestellten Anordnung dar. Aus diesem Bild geht hervor, dass die innere Oberflächentemperatur im Stoßbereich FußbodenNVand mit Sicherheit über dem Taupunkt liegt.

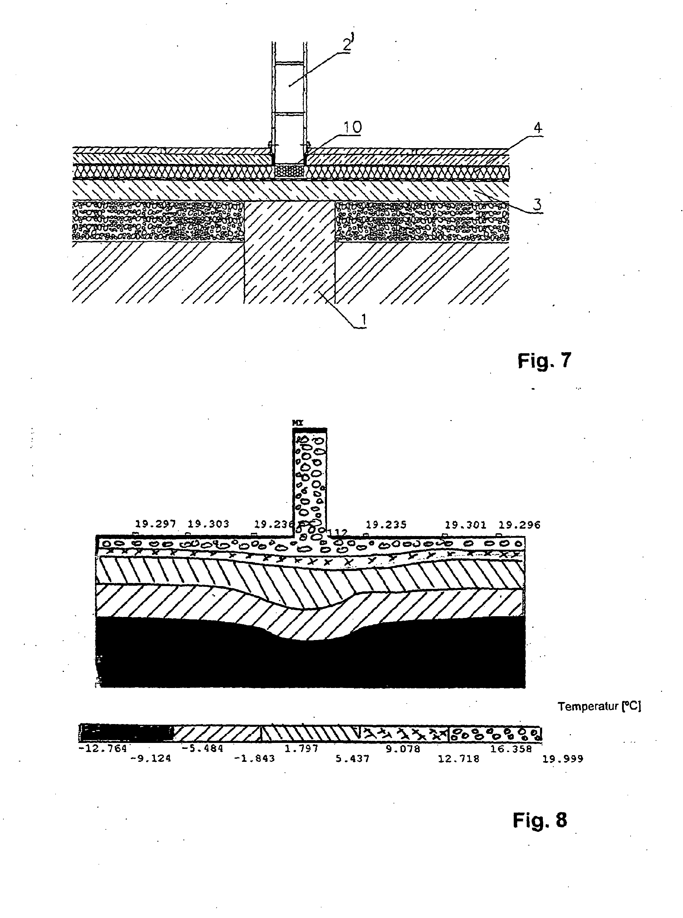

Fig. 7 zeigt im Querschnitt ...... unterhalb der Trennwand 2', dass zwischen dieser Trennwand 2' und der Betonplatte 3 des Fußbodens das Dämmblockelement 10 angeordnet ist, das nachstehend detailliert beschrieben ist. Weitere Fußbodenschichten werden nicht mehr detailliert beschrieben.

Fig. 8 zeigt die Temperaturverteilung bei der vorstehend dargestellten Anordnung. Aus dem Bild und der Auswertung der inneren Oberflächentemperaturen geht hervor, dass diese Anwendung die vorhandene Wärmebrücke wirksam beseitigt und dadurch eine kompakte wärmedämmende Ummantelung der gesamten Konstruktion entsteht.

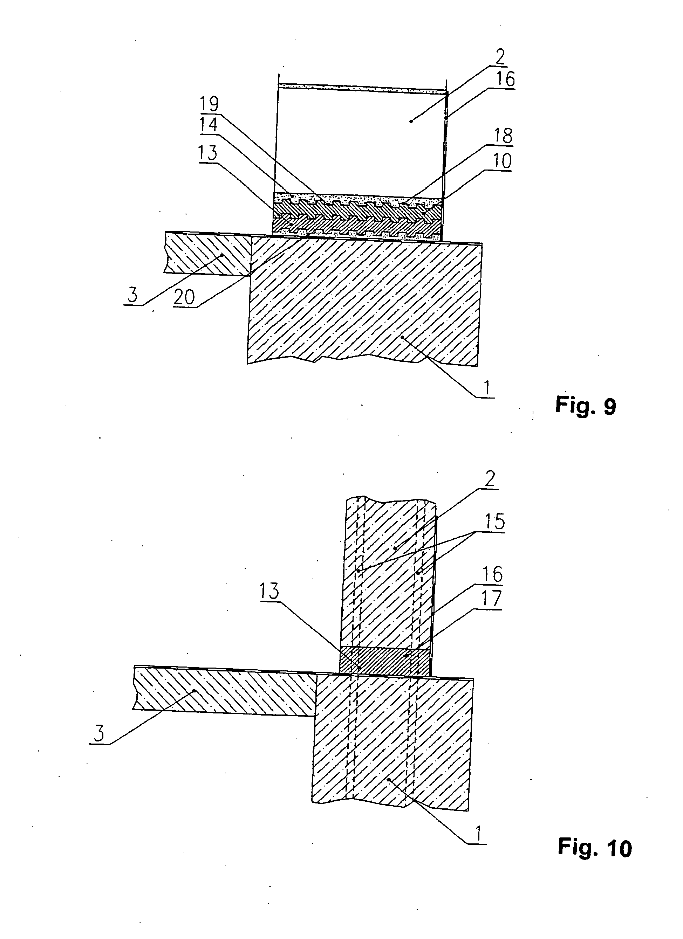

Fig. 9 zeigt ein Detail der Ausführung dieses Dämmblockelementes 10 gemäß der Erfindung. Das Blockelement 10 setzt sich aus HDPE-Dämmplatten 13 zusammen. Die Bezeichnung HDPE wird für sog. High-density Polyethylen, d.h. Polyethylen mit hoher Dichte (hoher Steifigkeit) verwendet - in diesem Falle handelt es sich um ein Material aus Recyclingkunststoff oder dessen Modifikationen. Dieses Material lässt sich bei der Produktion sehr gut formpressen und auf der Baustelle bearbeiten. In der vorgestellten Variante sind die Platten 13 mit Feder 18 und Nut 19 oder einer Vertiefung ausgeführt, welche beim Zusammenfügen ineinander einrasten. Diese Formgebung ermöglicht einen einfachen Zusammenbau der Platten 13 zu Dämmblocks 10, die formstabil sind; die Platten sind durch die Profilierung gegen unbeabsichtigtes Verschieben gesichert. Die obere Seite des Dämmblocks 10 kann mit einer Schicht Zementmörtel 14 versehen werden, so dass eine Ausgleichschicht und gleichzeitig auch eine Lagerfuge entstehen. Es ist offensichtlich, dass die Ausführung der Plattenoberfläche 13 mit Feder 18 und Nut 19 keine Einschränkung bei der Verwendung dieser Elemente darstellt - ein versierter Fachmann könnte sich sicherlich noch weitere Kombinationen dieser Plattenvorsätze und entsprechender Nuten oder Vertiefungen vorstellen. Zudem ist auch offensichtlich, dass die Platten 13 an beiden Seiten oder nur an einer Seite (als Endplatten) mit Feder und Nut ausgeführt werden können, wobei im letzteren Fall die andere Seite glatt bleibt.

Zwischen der Hydroisolierung 16 und der unteren Platte 13 wird eine Ausgleichschicht 20 aus Klebstoff aufgetragen.

Für den Einsatz beim Mauerwerk eignet sich eine beidseitig profilierte Platte aus Kunststoff. Diese Profilierung verhindert das Verschieben der Platten und hilft, waagerechte und schräg wirkende Kräfte ins Fundament und auf die erste Mauerwerklage zu übertragen.

Fig. 10 zeigt eine andere Ausführung des Dämmblocks 10 in Form eines bewehrten Wärmedämmblocks 17, der bei Wänden aus Ortbeton verwendet wird. Der bewehrte Dämmblock 17 ist senkrecht zu seinen Stoßflächen mit Bewehrung 15 versehen, die im Block 17 vergossen ist. Dieser Dämmblock 17 mit Bewehrung kann außerhalb der Baustelle vorgefertigt werden. Danach wird ein solcher Dämmblock 17 an geeigneter Stelle des Bauwerks angebracht und mit der Ortbetonwand zur gewünschten Form verbunden. Die Bewehrung 15 ist dann sowohl im Fundament 1, als auch in der Wand 2 verankert.

Eine Variante dieser Lösung stellt die Verwendung korrosionsfreier Bewehrung dar, die in die Bohrungen der Platten 13 des Dämmblocks 17 direkt auf der Baustelle angebracht wird. Diese Ausführung eignet sich für monolithische Stahlbetonkonstruktionen, wo zwei einseitig profilierte Kunststoffplatten eingesetzt werden, deren Profile ineinander einrasten, wodurch ein Verschieben dieser Platten verhindert wird. Die obere und untere Seite des Dämmblocks ist glatt ausgeführt. Die untere Seite lagert auf dem StB-Fundament, die obere Fläche bildet den unteren Teil der StB-Wand. Die Bewehrungen der Fundamente und der Wand werden durch die vorgefertigten Öffnungen miteinander verbunden.

## Patentansprüche

1. Wärmedämmblock zur Unterbrechung einer Wärmebrücke im Fußbereich eines Mauerwerks, angeordnet zwischen dem Fundament und der Wand des Mauerwerks, **dadurch** gwkennzeichnet, dass er aus mindestens zwei Platten (13) aus HDPE-Recyclingkunststoff oder dessen Modifizierungen besteht, deren Stoßflächen mit Feder (18) und Nut (19) oder einer Vertiefung versehen sind, die beim Zusammenfügen dieser Platten (13) ineinander einrasten.

2. Wärmedämmblock nach dem Anspruch 1, **dadurch gekennzeichnet, dass** die Platten (13) als ein kompakter Block (10) ausgeführt sind.

3. Wärmedämmblock nach dem Anspruch 1, **dadurch gekennzeichnet, dass** an der oberen Seite des Wärmedämmblocks eine Zementschicht (14) zum Ausgleichen und als Lagerfuge und an der unteren Seite zwischen der Hydroisolierung (16) und der unteren Platte (13) eine Ausgleichschicht aus Klebstoff (20) aufgetragen ist.

4. Wärmedämmblock nach den Ansprüchen 1, 2 oder 3, **dadurch gekennzeichnet, dass** die Randplatten (13) des Wärmedämmblocks an einer Seite glatt ausgeführt sind.

5. Wärmedämmblock nach dem Anspruch 1, **dadurch gekennzeichnet, dass** er senkrecht zu seinen Stoßflächen mit Bewehrung (15) versehen ist, die im Block vergossen ist.

6. Wärmedämmblock nach dem Anspruch 5, **dadurch gekennzeichnet, dass** er aus Platten (13) besteht, die mit Öffnungen für die Bewehrung (15) aus korrosionsfreiem Stahl versehen sind.

## Claims

1. Insulation block element for interrupting thermal bridges in the transition area between the foundation and wall of the building **characterized by** that it consists of at least two plates (13) from recycled plastics HDPE or its modifications, the contact faces of which are provided with protrutions (18) and grooves (18) or recesses for mutual engagement when the plates (13) are placed to each other.

2. Insulation block element according to the claim 1, **characterized by** that the plates (13) are realized as a compact block (10).

3. Insulation block element according to the claim 1, **characterized by** that on the upper face of the block a layer of cement mortar (14) is provided for levelling and for creation of the coherent loading joint and on the lower face between the hydro-insulation (16) and the lowest plate (13) a levelling layer of an adhesive (20) is provided.

4. Insulation block element according to the claim 1,2 or 3 **characterized by** that the periferal plates (13) of the block are realized as flat from one side.

5. Insulation block element according to the claim 1, **characterized by** that it is provided perpendicular to its contact faces with reinforcement (15) which is integrally incorporated into it.

6. Insulation block element according to the claim 5, **characterized by** that it is consisiting of plates (13) provided with openings for the reinforcement (15) of anticorrosive steel.

## Revendications

1. Bloc d'isolation pour interrompre des ponts thermiques dans la zone de transition entre un mur et une fondation, characterisée en ce que il consiste de au moin deux plaques (13) de HDPE-plastique recyclé ou son modifications, son faces de contact sont equipés avec les saillies (18) et les rainures (19) ou les excavations, qui mutuellment s'angager quand les plaques (13) son mutuellment appliqué.

2. Bloc d'isolation selon de la revendication 1, **characterisée** en ce que les plaques (13) sont crée comme un bloc compact.

3. Bloc d'isolation selon de la revendication 1, characterisée en ce que à la face supérieure une couche de mortier de ciment (1) est arrangée pour planner et pour la création de coherent joint d'appui et à la face d'inférieure est entre de la hydro-isolation (16) et à la plaque la plus d'inférieure (13) un couche du adhesif de planage est arrangée.

4. Bloc d'isolation selon des revendications 1,2 ou 3, characterisée en ce que les plaques extremes du bloc sont crée comme plat d'un face.

5. Bloc d'isolation selon de la revendication 1, characterisée en ce que il est equipée perpendiculairment à son faces de contact avec une armature (15), qui est scellée dans le bloc.

6. Bloc d'isolation selon de la revendication 5, **characteriseé** en ce que il est assemblée des plaques (13) avec les orifices pour l'armature (15) de l'acier inoxydable.
